# EUROPÄISCHE PATENTSCHRIFT

(11) **EP 2 848 583 B1**
(45) Veröffentlichungstag und Bekanntmachung des Hinweises auf die Patenterteilung: **25.05.2016**
(21) Anmeldenummer: 14180942.6
(22) Anmeldetag: 14.08.2014
(51) Int. Cl.: B67D 3/00, B67D 7/34

(54) **ENTNAHMESYSTEM**
RETRIEVAL SYSTEM
SYSTÈME DE PRÉLÈVEMENT

(30) Priorität: 12.09.2013 DE 102013110020
(43) Veröffentlichungstag der Anmeldung: 18.03.2015
(73) Patentinhaber: as Strömungstechnik GmbH, 73760 Ostfildern (DE)
(72) Erfinder: Szeteli, Andreas, 70794 Ostfildern (DE)
(74) Vertreter: Ruckh, Rainer Gerhard

(56) Entgegenhaltungen:
- EP-B1- 0 977 702
- US-A1- 2004 172 160
- US-A1- 2006 283 932
- US-B1- 6 206 240
- US-B1- 6 799 614

## Beschreibung

Die Erfindung betrifft ein Entnahmesystem gemäß dem Oberbegriff des Anspruchs 1.

Ein derartiges Entnahmesystem ist aus der US 6 206 240 A bekannt. Dieses Entnahmesystem befindet sich an einem transportierbaren Behälter, der mit flüssigen Chemikalien befüllt ist. Ein Tauchrohr kann in einem Spundkörper so gelagert werden, dass es in den Behälter ragt. Weiterhin kann am Tauchrohr eine Anschlussbuchse angebracht werden.

Ein weiteres Entnahmesystem ist aus der EP 0 977 702 B1 bekannt. Dieses Entnahmesystem dient zum Befüllten und Entleeren von Behältern, insbesondere von Fässern, die mit flüssigen Chemikalien befüllt sind. Das Entnahmesystem umfasst einen Behälterverschluss. Dieser Behälterverschluss wird allgemein in einen Spundkopf aufnehmende Behälteröffnung eingesetzt. Der Behälterverschluss selbst weist ein mit dem Spundkopf verbindbares Tauchrohr auf, über welches im Behälter gelagerte Flüssigkeiten entnommen werden können und über welches Flüssigkeiten dem Behälter zugeführt werden können. Weiterhin weist der Behälterverschluss ein Entnahmeanschlusselement auf, das typisch in Form eines Entnahmekopfs ausgebildet ist, und welches an den Spundkopf angeschlossen werden kann.

Über das Entnahmeanschlusselement erfolgt dann eine Entnahme von Flüssigkeit aus dem Behälter oder gegebenenfalls auch eine Zufuhr von Flüssigkeit. Hierzu wird über das Entnahmeanschlusselement eine Pumpe angeschlossen, um die Entnahme oder Zufuhr von Flüssigkeit vorzunehmen.

Bei der in den Behältern gelagerten Flüssigkeiten handelt es sich typisch um flüssige Spezialchemikalien.

Bei diesen Spezialchemikalien wird einerseits eine hohe Reinheit gefordert, das heißt es müssen Verschmutzungen von diesen Chemikalien ferngehalten werden. Weiterhin kann es sich bei diesen Spezialchemikalien um gefährliche Substanzen handeln, so dass aus bereits diesem Grunde ein unkontrolliertes Austreten von Flüssigkeit vermieden werden muss.

Davon ausgehend liegt der Erfindung die Aufgabe zugrunde, ein Entnahmesystem bereitzustellen, welches eine sichere und gefahrlose Entnahme von Flüssigkeiten aus einem Behälter ermöglicht.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die Erfindung betrifft ein Entnahmesystem für einen transportierbaren Behälter, mit einem Tauchrohr, welches in einem Spundkörper, der in einer Behälteröffnung des Behälters gelagert ist, montiert ist. Weiterhin umfasst das Entnahmesystem einen Entnahmekopf, welcher am Tauchrohr befestigt werden kann. Im oder am Entnahmekopf ist ein Schalter vorgesehen, welcher ein Schaltsignal generiert, dessen Schaltzustände angeben, ob der Entnahmekopf in einer Sollposition am Tauchrohr befestigt ist oder nicht.

Der Grundgedanke der Erfindung besteht somit darin, dass anhand des im Schalter generierten Schaltsignals selbsttätig überprüft wird, ob der Entnahmekopf korrekt am Tauchrohr befestigt ist oder nicht. Damit kann ein unkontrollierter Austritt von Flüssigkeit aus dem Behälter vermieden werden, da mit dem Schalter eventuelle Leckstellen zwischen Entnahmekopf und Tauchrohr infolge einer unzureichenden Befestigung zwischen diesen Einheiten erkannt werden und damit rechtzeitig Gegenmaßnahmen eingeleitet werden können.

Die erfindungsgemäße Kontrolle des Befestigungszustands zwischen Entnahmekörper und Tauchrohr mittels des Schalters ist allgemein für verschiedenartige Befestigungsmittel anwendbar.

Besonders vorteilhaft wird der Entnahmekopf durch eine Verschraubung am Tauchrohr fixiert, und der Schalter ist nur betätigt, wenn der Entnahmekopf korrekt mit dem Tauchrohr verschraubt ist.

Weiterhin kann der Entnahmekopf des Entnahmesystems einen Entnahme- und Befüllkopf bilden, das heißt dass über den Entnahmekopf Flüssigkeit aus dem Behälter entnommen und in diesen eingefüllt werden kann.

Gemäß einer vorteilhaften Ausgestaltung wird das Schaltsignal des Schalters in eine Steuereinheit eingelesen, und in Abhängigkeit dieses Schaltsignals wird mittels der Steuereinheit die Entnahme oder Befüllung des Behälters freigegeben oder gesperrt.

Zweckmäßig steuert die Steuereinheit eine Pumpe an, mittels derer Flüssigkeit aus dem Behälter entnommen beziehungsweise in diesen eingefüllt werden kann. Über die Steuereinheit wird der Betrieb der Pumpe nur dann freigegeben, wenn mit dem Schaltsignal des Schalters eine fehlerfreie Befestigung des Entnahmekopfs am Tauchrohr gemeldet wird.

Auf diese Weise wird eine völlig automatisiert ablaufende Sicherheitsfunktion für das erfindungsgemäße Entnahmesystem realisiert.

Die Funktionalität dieses Sicherheitssystems kann dadurch noch weiter erweitert werden, dass das Schaltsignal des Schalters einem Warnsignalgeber zugeführt wird, welcher ein Warnsignal generiert, wenn der Schalter nicht betätigt ist.

Dadurch werden Benutzern des Entnahmesystems Fehlzustände der Befestigung zwischen Entnahmekopf und Tauchrohr angezeigt, so dass der jeweilige Benutzer sofort Gegenmaßnahmen ergreifen kann. Der Warnsignalgeber kann beispielsweise von einer Hupe gebildet sein, die ein akustisches Warnsignal abgibt. Alternativ kann der Warnsignalgeber von einer Lampe gebildet sein, die ein optisches Warnsignal abgibt.

Die Befestigung des Entnahmekopfs am Tauchrohr kann mittels eines Roboters erfolgen.

Die mit dem Roboter selbsttätig durchgeführte Befestigung ist deshalb möglich, da mit dem Schaltsignal des Schalters der Befestigungszustand des Entnahmekopfs am Tauchrohr kontrolliert werden kann, so dass damit der Roboter in Abhängigkeit dieses Schaltsignals die Befestigung durchführen kann. Gemäß einer vorteilhaften Ausgestaltung der Erfindung ist der Schalter ein Reedschalter oder ein kapazitiver oder induktiver Sensor.

Bei diesen Ausbildungen wird generell der Schalter mittels eines Betätigungselements betätigbar, wobei die Position des Betätigungselements abhängig ist vom Befestigungszustand des Entnahmekopfs am Tauchrohr.

Vorteilhaft ist der Schalter betätigt, wenn der Entnahmekörper nicht in der Sollposition am Tauchrohr befestigt ist, ansonsten ist der Schalter nicht betätigt.

Der Schalter ist somit als Öffner ausgebildet.

Das Befestigungselement besteht allgemein aus einem elektrisch leitfähigen Material oder einem Magneten. Das Befestigungselement arbeitet dabei nicht kontaktbehaftet sondern berührungslos, indem das Befestigungselement dann, wenn es im Einflussbereich dicht vor dem Schalter ist, durch ein magnetisches oder elektrisches Feld den Schalter berührungslos betätigt.

Derartige Systeme von Schaltern mit zugeordneten Befestigungselementen weisen einen einfachen und robusten Aufbau auf.

Besonders vorteilhaft ist das Betätigungselement mittels einer Feder, die zwischen dem Entnahmekörper und dem Tauchrohr gelagert ist, in seiner Position verstellbar.

Mit der Feder wird auf konstruktiv einfache Weise die Bewegung zwischen Entnahmekörper und Tauchrohr, die zur Herstellung der Befestigung zwischen diesen Elementen notwendig ist, in eine Bewegung des Befestigungselements umgesetzt. Dabei erfolgt die Umsetzung mittels der Feder derart, dass das Befestigungselement einen definierten Schaltweg zwischen der Betätigungsstellung und einer Nicht-Betätigung des Schalters ausführt.

Gemäß einer vorteilhaften Ausgestaltung der Erfindung sind der Schalter und dessen zugeordnete Bauteile von der Flüssigkeit im Behälter abgekapselt.

Dadurch werden Beeinträchtigungen oder Beschädigungen des Schalters und der diesen zugeordneten Komponenten durch die im Behälter vorhandene Flüssigkeit ausgeschlossen.

Prinzipiell können der Entnahmekörper, das Tauchrohr und die zugeordneten Befestigungsmittel aus metallischen Werkstoffen bestehen. Besonders vorteilhaft bestehen jedoch diese Komponenten aus chemisch resistenten Kunststoffen, so dass keine Gefahr besteht, dass die im Behälter vorhandene Flüssigkeit diese Komponenten angreifen und beschädigen kann.

Gemäß einer vorteilhaften Ausgestaltung bringt das Schaltsignal des Schalters einen am Entnahmekopf integrierten optischen Signalgeber zum Leuchten, wenn der Schalter betätigt ist.

Bevorzugt ist der Signalgeber von einer Leuchtdiode gebildet. Mit dem Signalgeber wird dem Benutzer sofort erkennbar signalisiert, ob der Entnahmekopf korrekt am Tauchrohr befestigt ist.

Die Erfindung wird im Folgenden anhand der Zeichnungen erläutert. Es zeigen:
- Figur 1:: Schematische Darstellung des erfindungsgemäßen Entnahmesystems.
- Figur 2:: Darstellung des Entnahmekopfs des Entnahmesystems gemäß Figur 1 und mit betätigtem Schalter.
- Figur 3:: Vergrößerte Detaildarstellung der Anordnung von Figur 2.
- Figur 4:: Darstellung des Entnahmekopfs des Entnahmesystems gemäß Figur 1 mit betätigtem Schalter.
- Figur 5:: Vergrößerte Detaildarstellung der Anordnung von Figur 4.

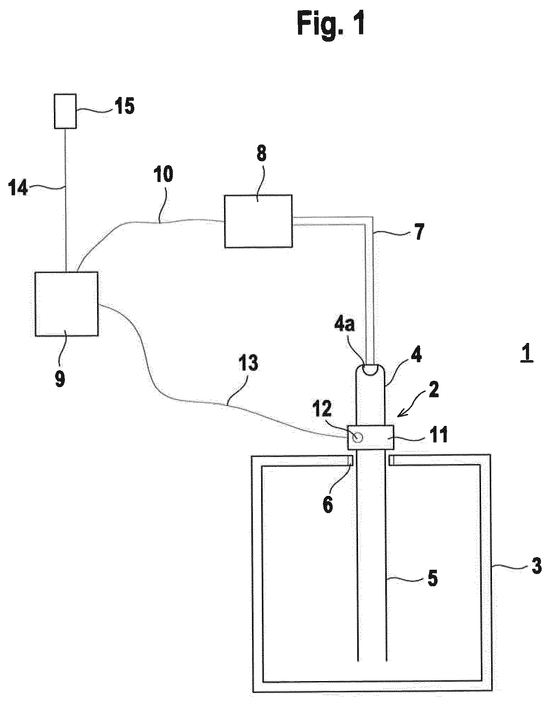

Figur 1 zeigt schematisch ein erstes Ausführungsbeispiel des erfindungsgemäßen Entnahmesystems 1. Das Entnahmesystem 1 umfasst einen Behälterverschluss 2 für einen transportablen Behälter 3, der insbesondere von einem Fass oder dergleichen gebildet wird. In dem Behälter 3 wird eine Flüssigkeit gelagert. Bei in derartigen Behältern 3 gelagerten Flüssigkeiten handelt es sich insbesondere um flüssige Spezialchemikalien.

Der Behälterverschluss 2 umfasst einen Entnahmekopf 4 und ein Tauchrohr 5. Das Tauchrohr 5 ist in einem Spundkopf 6, der in einer Behälteröffnung des Behälters 3 sitzt, gelagert und so fest mit dem Behälter 3 verbunden. Die Komponenten des Behälterverschlusses 2 bestehen aus chemisch resistenten Kunststoffen, so dass diese von den im Behälter 3 gelagerten Spezialchemikalien nicht angegriffen werden. Der Behälterverschluss 2 dient meist auch als Verschluss des Behälters 3 während dessen Transportes.

Der Entnahmekopf 4 dient zur Entnahme von Flüssigkeiten aus dem Behälter 3. Hierzu weist der Entnahmekopf 4 an seinem oberen Ende einen Flüssigkeitsanschluss 4a auf. An diesem Flüssigkeitsanschluss 4a wird eine Leitung 7 angeschlossen, die zu einer Pumpe 8 führt.

Die Pumpe 8 wird von einer Steuereinheit 9 gesteuert. Hierzu ist die Pumpe 8 über ein Kabel 10 an die Steuereinheit 9 angeschlossen.

Der Entnahmekörper 4 wird mittels Befestigungsmittel 11 am Tauchrohr 5 befestigt. Die Betätigung der Befestigungsmittel 11 kann mittels eines Roboters erfolgen. Im vorliegenden Fall wird der Entnahmekörper 4 am Tauchrohr 5 angeschraubt. Mittels eines Schalters 12 wird selbsttätig erfasst, ob der Entnahmekörper 4 korrekt und in einer Sollposition am Tauchrohr 5 befestigt ist. Das im Schalter 12 generierte Schaltsignal wird in die Steuereinheit 9 eingelesen, wobei hierzu der Schalter 12 über ein Kabel 13 mit der Steuereinheit 9 verbunden ist. Die Steuereinheit 9 steuert die Pumpe 8 in Abhängigkeit des vom Schalter 12 generierten Schaltsignals. Dabei wird der Betrieb der Pumpe 8 von der Steuereinheit 9 nur dann freigegeben, wenn der Schalter 12 eine fehlerfreie Befestigung des Entnahmekörpers 4 am Tauchrohr 5 meldet. Damit werden Gefahrenzustände derart, dass bei fehlerhafter Befestigung des Entnahmekörpers 4 eine Flüssigkeitsentnahme aus dem Behälter 3 oder ein Flüssigkeitszufuhr zu diesem erfolgt und dabei gegebenenfalls Flüssigkeit im Bereich der nicht vollständig geschlossenen Befestigungsmittel 11 austritt, vermieden.

Schließlich ist an die Steuereinheit 9 über ein weiteres Kabel 14 ein Warnsignal 15 angeschlossen. Dieses gibt ein Warnsignal 15 aus, wenn mit dem Schaltsignal des Schalters 12 eine fehlerhafte Befestigung gemeldet wird. Als Warnsignalgeber 15 kann eine Hupe oder eine Lampe vorgesehen sein.

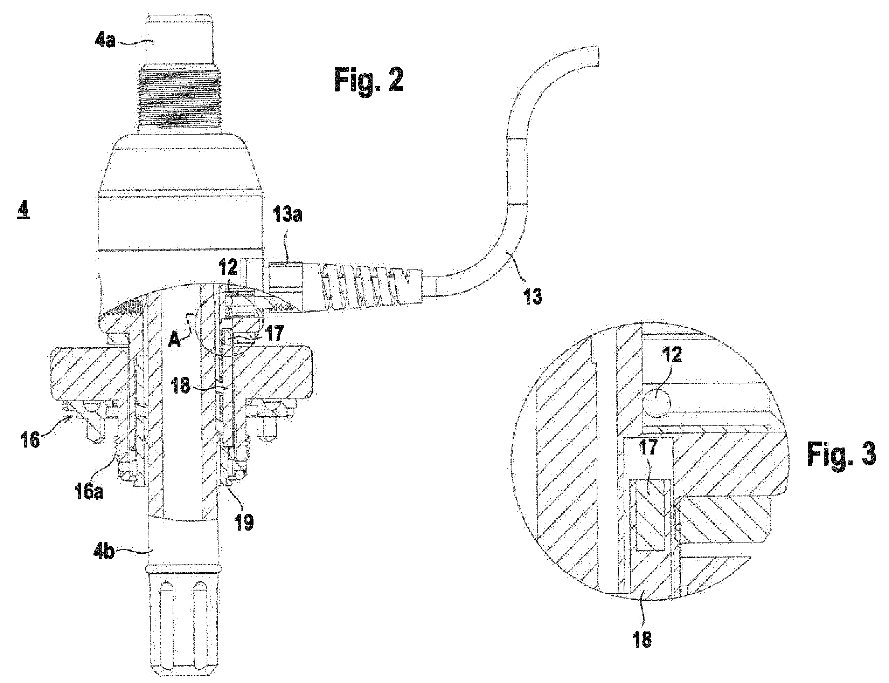

Figur 2 zeigt den Entnahmekörper 4 des Entnahmesystems 1 in einer separaten Darstellung, wobei der Schalter 12 im nicht betätigten Zustand dargestellt ist. Figur 3 zeigt das in Figur 2 mit A bezeichnete Detail in einer vergrößerten Darstellung.

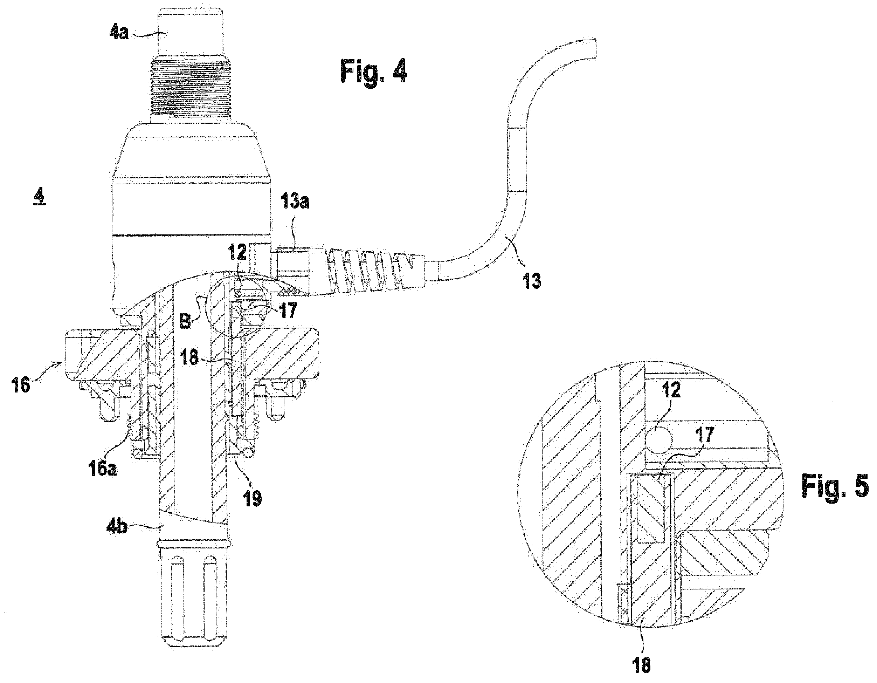

Figur 4 zeigt den Entnahmekörper 4 des Entnahmesystems 1 ebenfalls in einer separaten Darstellung, wobei hier der Schalter 12 betätigt ist. Figur 5 zeigt das in Figur 4 mit B bezeichnete Detail in einer vergrößerten Darstellung.

Wie die Figuren 2 und 4 zeigen, ist der Flüssigkeitsanschluss 4a des Entnahmekörpers 4 an dessen oberen Ende vorgesehen. Am unteren Ende des Entnahmekörpers 4 ist ein rohrförmiger Anschluss 4b vorgesehen, der in das Tauchrohr 5 eingeführt werden kann. Als Befestigungsmittel 11 zur Befestigung des Entnahmekörpers 4 am Tauchrohr 5 ist eine Klemmmutter 16 vorgesehen. Diese weist eine zentrale, in axialer Richtung verlaufende Bohrung auf, in der der rohrförmige Anschluss 4b des Entnahmekörpers 4 verläuft. Die Klemmmutter 16 weist ein Außengewinde 16a auf, welches in ein nicht dargestelltes Gewinde im Tauchrohr 5 eingeschraubt wird, um so die Verschraubung des Entnahmekopfs 4 mit dem Tauchrohr 5 durchzuführen.

Mittels des Schalters 12 wird geprüft, ob die Verschraubung zwischen Entnahmekörper 4 und Tauchrohr 5 korrekt ist. Der Schalter 12 ist hierzu im Gehäuse des Entnahmekörpers 4 oberhalb der Klemmmutter 16 angeordnet. Dabei ist der Schalter 12 abgekapselt von der Flüssigkeit im Behälter 3 gelagert, so dass er nicht in Kontakt mit dieser kommen kann.

Der Schalter 12 kann allgemein von einem Sensor gebildet sein, wie zum Beispiel einem kapazitiven oder induktiven Sensor. Im vorliegenden Fall ist der Schalter 12 als Reedschalter ausgebildet. Der Schalter 12 ist elektrisch an das Kabel 13 angeschlossen, das mit einem Kabelanschluss 13a am Gehäuse des Entnahmekörpers 4 gelagert ist.

Der Reedschalter kann mittels eines Befestigungselements 17 in Form eines Magneten betätigt werden. Die Betätigung erfolgt berührungslos derart, dass dann, wenn der Reedschalter im Bereich des Magnetfelds des Befestigungselements 17 liegt, zwei Kontaktierungen des Reedschalters geschlossen werden, das heißt der Schalter 12 ist geschlossen. Ist das Befestigungselement 17 weit vom Schalter 12 entfernt, ist der Schalter 12 nicht betätigt, wie in den Figuren 2 und 3 dargestellt.

Das Befestigungselement 17 ist von einem plattenförmigen Magneten gebildet, der auf einem stabförmigen Führungselement 18 gelagert ist. Die Längsachse des Führungselements 18 verläuft in vertikaler Richtung. Das Führungselement 18 ist entlang dieser Längsachse verschiebbar gelagert.

Das Führungselement 18 mit dem Befestigungselement 17 ist an eine Feder 19 gekoppelt, die zwischen der Klemmmutter 16 und dem rohrförmigen Anschluss 4b des Entnahmekörpers 4 gelagert ist.

Die Figuren 2 und 3 zeigen den Fall, wenn die Klemmmutter 16 nicht korrekt auf dem Tauchrohr 5 aufgeschraubt ist und somit eine fehlerfreie Verbindung zwischen Entnahmekörper 4 und Tauchrohr 5 vorliegt. Durch das Einschrauben der Klemmmutter 16 in das Tauchrohr 5 wird die Feder noch unten gedrückt und somit das Führungselement 18 nach unten gezogen, das heißt das Befestigungselement 17, das auf dem Führungselement 18 gelagert ist, wird vom Schalter 12 weggezogen und befindet sich somit außerhalb des Einflussbereichs des Schalters 12, so dass dieser offen, das heißt nicht betätigt ist.

Die Figuren 4 und 5 zeigen den Fall, wenn die Klemmmutter 16 korrekt auf dem Tauchrohr 5 oder überhaupt nicht auf diesem aufgeschraubt ist. In diesem Fall ist die Feder durch die Klemmmutter 16 nicht nach unten gezogen, so dass auch das Führungselement 18 nicht nach unten gezogen ist. Damit befindet sich das Befestigungselement 17 im Einflussbereich des Schalters 12, wodurch dieser betätigt, das heißt geschlossen ist.

Mit den so gebildeten Schaltzuständen des Schaltsignals wird somit exakt unterschieden, ob der Entnahmekörper 4 ordnungsgemäß und fehlerfrei am Tauchrohr 5 befestigt wird oder nicht. Das Schaltsignal des Schalters 12 wird über das Kabel 13 in die Steuereinheit 9 eingelesen, so dass die Steuereinheit 9 die unter Bezug auf Figur 1 erläuterten Steuerungsvorgänge durchführen kann.

### as Strömungstechnik GmbH 73760 Ostfildern

### Bezugszeichenliste

- (1): Entnahmesystem
- (2): Behälterverschluss
- (3): Behälter
- (4): Entnahmekörper
- (4a): Flüssigkeitsanschluss
- (4b): Anschluss
- (5): Tauchrohr
- (6): Spundkopf
- (7): Leitung
- (8): Pumpe
- (9): Steuereinheit
- (10): Kabel
- (11): Befestigungsmittel
- (12): Schalter
- (13): Kabel
- (13a): Kabelanschluss
- (14): Kabel
- (15): Warnsignalgeber
- (16): Klemmmutter
- (16a): Außengewinde
- (17): Befestigungselement
- (18): Führungselement

## Patentansprüche

1. Entnahmesystem (1) für einen transportierbaren Behälter (3), mit einem Tauchrohr (5), welches in einem Spundkörper, der in einer Behälteröffnung des Behälters (3) gelagert ist, montiert ist, und mit einem Entnahmekopf, welcher am Tauchrohr (5) befestigt werden kann, **dadurch gekennzeichnet, dass** im oder am Entnahmekopf ein Schalter (12) vorgesehen ist, welcher ein Schaltsignal generiert, dessen Schaltzustände angeben, ob der Entnahmekopf in einer Sollposition am Tauchrohr (5) befestigt ist oder nicht.

2. Entnahmesystem nach Anspruch 1, **dadurch gekennzeichnet, dass** der Entnahmekopf durch eine Verschraubung am Tauchrohr (5) fixiert wird, und dass der Schalter (12) nur betätigt ist, wenn der Entnahmekopf korrekt mit dem Tauchrohr (5) verschraubt ist.

3. Entnahmesystem nach einem der Ansprüche 1 oder 2, **dadurch gekennzeichnet, dass** das Schaltsignal des Schalters (12) in eine Steuereinheit (9) eingelesen wird, und dass in Abhängigkeit dieses Schaltsignals mittels der Steuereinheit eine Pumpe (8) gesteuert wird.

4. Entnahmesystem nach einem der Ansprüche 1 bis 3, **dadurch gekennzeichnet, dass** das Schaltsignal des Schalters (12) einem Warnsignalgeber (15) zugeführt wird, welcher ein Warnsignal generiert, wenn der Schalter (12) nicht betätigt ist.

5. Entnahmesystem nach einem der Ansprüche 1 bis 4, **dadurch gekennzeichnet, dass** der Schalter (12) mittels eines Betätigungselements betätigbar ist, wobei die Position des Betätigungselements abhängig ist vom Befestigungszustand des Entnahmekopfs am Tauchrohr (5).

6. Entnahmesystem nach Anspruch 5, **dadurch gekennzeichnet, dass** der Schalter (12) betätigt ist, wenn der Entnahmekörper (4) nicht in der Sollposition am Tauchrohr (5) befestigt ist, und dass ansonsten der Schalter (12) nicht betätigt ist.

7. Entnahmesystem nach einem der Ansprüche 5 oder 6, **dadurch gekennzeichnet, dass** das Betätigungselement mittels einer Feder, die zwischen dem Entnahmekörper (4) und dem Tauchrohr (5) gelagert ist, in seiner Position verstellbar ist.

8. Entnahmesystem nach einem der Ansprüche 1 bis 7, **dadurch gekennzeichnet, dass** der Schalter (12) ein Reedschalter oder ein kapazitiver oder induktiver Sensor ist.

9. Entnahmesystem nach einem der Ansprüche 1 bis 7, **dadurch gekennzeichnet, dass** der Schalter (12) und dessen zugeordnete Bauteile von der Flüssigkeit im Behälter (3) abgekapselt sind.

10. Entnahmesystem nach einem der Ansprüche 1 bis 8, **dadurch gekennzeichnet, dass** dessen Komponenten aus chemisch resistenten Kunststoffen hergestellt sind.

11. Entnahmesystem nach einem der Ansprüche 1 bis 10, **dadurch gekennzeichnet, dass** das Schaltsignal des Schalters (12) einen am Entnahmekopf (4) integrierten optischen Signalgeber zum Leuchten bringt, wenn der Schalter (12) betätigt ist.

## Claims

1. Removal system (1) for a transportable container (3), with an immersion tube (5), which is mounted in a plug body mounted in a container opening of the container (3), and with a removal head which can be fastened to the immersion tube (5), **characterised in that** provided in or at the removal head is a switch (12) which generates a switch signal, the switch states of which indicate whether or not the removal head is fastened in a desired position at the immersion tube (5).

2. Removal system according to claim 1, **characterised in that** the removal head is fixed to the immersion tube (5) by a screw connection and that the switch (12) is actuated only when the removal head is correctly screw-connected with the immersion tube (5).

3. Removal system according to one of claims 1 and 2, **characterised in that** the switch signal of the switch (12) is read into a control unit (9) and that a pump (8) is controlled by means of the control unit in dependence on this switch signal.

4. Removal system according to any one of claims 1 to 3, **characterised in that** the switch signal of the switch (12) is supplied to a warning signal transmitter (15) which generates a warning signal when the switch is not actuated.

5. Removal system according to any one of claims 1 to 4, **characterised in that** the switch (12) is actuable by means of an actuating element, wherein the position of the actuating element is dependent on the state of fastening of the removal head to the immersion tube (5).

6. Removal system according to claim 5, **characterised in that** the switch (12) is actuated when the removal body (4) is not fastened in the desired position at the immersion tube (5) and that otherwise the switch (12) is not actuated.

7. Removal system according to one of claims 5 and 6, **characterised in that** the actuating element is adjustable in its position by means of a spring which is mounted between the removal body (4) and the immersion tube (5).

8. Removal system according to any one of claims 1 to 7, **characterised in that** the switch (12) is a Reed switch or a capacitive or an inductive sensor.

9. Removal system according to any one of claims 1 to 7, **characterised in that** the switch (12) and the components associated therewith are encapsulated by the liquid in the container (3).

10. Removal system according to any one of claims 1 to 8, **characterised in that** the components thereof are made from chemically resistant synthetic materials.

11. Removal system according to any one of claims 1 to 10, **characterised in that** the switch signal of the switch (12) causes lighting up of an optical signal transmitter, which is integrated in the removal head (4), when the switch (12) is actuated.

## Revendications

1. Système de prélèvement (1) pour un récipient transportable (3), avec un tube plongeur (5), lequel est monté dans un corps de bonde qui est logé dans une ouverture du récipient (3), et avec une tête de prélèvement qui peut être fixée au tube plongeur (5), **caractérisé en ce qu'**un commutateur (12) est prévu dans ou sur la tête de prélèvement, lequel génère un signal de commutation dont les état de commutation indiquent si la tête de prélèvement est fixée ou non dans une position de consigne sur le tube plongeur (5).

2. Système de prélèvement selon la revendication 1, **caractérisé en ce que** la tête de prélèvement est fixée au tube plongeur (5) par un raccord à vis, et que le commutateur (12) n'est actionné que lorsque la tête de prélèvement est correctement vissée avec le tube plongeur (5).

3. Système de prélèvement selon l'une des revendications 1 ou 2, **caractérisé en ce que** le signal de commutation du commutateur (12) est lu dans une unité de commande (9) et qu'en fonction de ce signal de commutation, une pompe (8) est commandée au moyen de l'unité de commande.

4. Système de prélèvement selon l'une des revendications 1 à 3, **caractérisé en ce que** le signal de commutation du commutateur (12) est amené à un émetteur de signal d'avertissement (15) qui génère un signal d'avertissement lorsque le commutateur (12) n'est pas actionné.

5. Système de prélèvement selon l'une des revendications 1 à 4, **caractérisé en ce que** le commutateur (12) peut être actionné au moyen d'un élément d'actionnement, la position de l'élément d'actionnement dépendant de l'état de fixation de la tête de prélèvement sur le tube plongeur (5).

6. Système de prélèvement selon la revendication 5, **caractérisé en ce que** le commutateur (12) est actionné lorsque le corps de prélèvement (4) n'est pas fixé dans la position de consigne sur le tube plongeur (5) et que sinon le commutateur (12) n'est pas actionné.

7. Système de prélèvement selon l'une des revendications 5 ou 6, **caractérisé en ce que** la position de l'élément d'actionnement est réglable au moyen d'un ressort qui est monté entre le corps de prélèvement (4) et le tube plongeur (5).

8. Système de prélèvement selon l'une des revendications 1 à 7, **caractérisé en ce que** le commutateur (12) est un commutateur Reed ou un capteur capacitif ou inductif.

9. Système de prélèvement selon l'une des revendications 1 à 7, **caractérisé en ce que** le commutateur (12) et les composants qui lui sont associés sont isolés du liquide contenu dans le récipient (3).

10. Système de prélèvement selon l'une des revendications 1 à 8, **caractérisé en ce que** ses composants sont fabriqués à partir de matières plastiques chimiquement résistantes.

11. Système de prélèvement selon l'une des revendications 1 à 10, **caractérisé en ce que** le signal de commutation du commutateur (12) provoque l'allumage d'un émetteur de signaux optiques intégré sur la tête de prélèvement (4) lorsque le commutateur (12) est actionné.
